# EUROPEAN PATENT SPECIFICATION

(11) **EP 3 372 190 B1**
(45) Date of publication and mention of the grant of the patent: **05.07.2023**
(21) Application number: 16804825.4
(22) Date of filing: 26.10.2016
(51) Int. Cl.: A61C 8/00

(54) **UNIT COMPRISING A DENTAL IMPLANT AND PROSTHETIC COMPONENTS, INCLUDING A TRANSEPITHELIAL SLEEVE WITH AN ANTI-ROTATIONAL UPPER CONNECTION**
EINHEIT MIT EINEM DENTALIMPLANTAT UND PROTHETISCHEN KOMPONENTEN, EINSCHLIESSLICH EINER TRANSEPITHELIALEN HÜLSE MIT EINER VERDREHSICHERE OBEREN VERBINDUNG
ENSEMBLE D'IMPLANT DENTAIRE ET DE COMPOSANTS PROTHÉTIQUES, QUI COMPREND UN MANCHON TRANSÉPITHÉLIAL AVEC RACCORD SUPÉRIEUR ANTIROTATIF

(30) Priority: 06.11.2015 ES 201531601
(43) Date of publication of application: 12.09.2018
(73) Proprietor: Biotechnology Institute, I Mas D, S.L., 01005 Vitoria (Álava) (ES)
(72) Inventor: ANITUA ALDECOA, Eduardo, 01005 Vitoria (Álava) (ES)
(74) Representative: Cueto, Sénida
(86) International application number: PCT/ES2016/070762
(87) International publication number: WO 2017/077151

(56) References cited:
- EP-A1- 0 473 262
- US-A- 5 104 318
- US-A1- 2008 299 516
- US-A1- 2014 011 160

## Description

### Field of the Invention

The invention relates to a set of a dental implant and prosthetic components, and particularly to a set that includes a transepithelial sleeve intended to be fixed to a dental implant and which has an anti-rotational upper connection for the securing of an upper part that supports a single dental prosthesis.

### Prior Art

A dental implant is a biocompatible and osteoconductive part configured to be inserted in a patient's upper or lower jaw bone to act as an anchor for one or more dental prostheses or artificial teeth. The number of artificial teeth supported by each implant depends on various factors, particularly on where the implant is to be placed, whether there are healthy teeth or other dental prostheses near the implant and the number of artificial teeth to be inserted.

For example, it is common practice to fit a dental prosthesis that includes a set of various artificial teeth on two or more dental implants. It is also common to fit a dental prosthesis including a single artificial tooth to a single dental implant, referred to as a unitary implant. On another hand, multiple or unitary dental prosthesis can be fitted to the implant or the implants immediately after the insertion of the implant or implants in the patient's bone, this being known as immediate loading. Alternatively, it is possible to connect the prosthesis some time after the insertion of the implants, for example to allow for the osseointegration of the implants and for treating any infections.

Fixing a dental prosthesis to an implant normally requires certain intermediate parts. In the first place, the upper end of the implant is connected to a part that is commonly known as a "transepithelial sleeve" or "transepithelial pillar", which is shaped like a sleeve having a through hole. The transepithelial pillar is coupled or seated on the head of the implant and is fixed to the implant by a first screw that extends through the through hole of the transepithelial pillar and is threaded to an inner blind threaded hole of the implant, retaining the pillar against the implant. Next, a pillar post is placed on the transepithelial pillar and secured to the transepithelial pillar by a screw that extends through the pillar post and is threaded to a blind threaded hole of the first screw. The unitary or multiple dental prosthesis is formed on the pillar post and secured to the pillar post using cement or another adhesive substance.

In short, the purpose of the transepithelial pillar is to extend the head of the implant through the gum, providing a connection above the gum to which the additional parts and the dental prosthesis can be secured. This allows, for instance, moving the artificial tooth away from the gum and therefore preventing the artificial tooth from becoming embedded in the gum and deteriorating the gum. In other words, the transepithelial pillar helps respect the biological environment in the patient's mouth. Another advantage of a transepithelial pillar is that, in "extending" the head of the implant, the transepithelial pillar facilitates the capture of imprints for the subsequent construction of the dental prosthesis.

Conventional transepithelial pillars generally have an upper female opening, for the connection of a lower male termination of the pillar post. The upper female opening is generally cylindrical or circular. This allows multiple prostheses to be easily installed on conventional pillars, as the circular section facilitates the variation of the rotational position of the pillar post with respect to the transepithelial pillar, to correct divergences and adjust to the orientation required for the multiple prosthesis.

However, in conventional unitary implant installations, it is common to connect the pillar post directly to the dental implant, without an intermediate transepithelial pillar, to ensure that the unitary dental prosthesis remains fixed relative to the dental implant. Therefore, the insertion of unitary implants does not benefit from the aforementioned advantages of introducing a transepithelial pillar.
For example, is known the patent application US2014011160A1 which shows a dental implant, transepithelial sleeve and upper part, where the dental implant and the transepithelial sleeve are connected by a first anti-rotational connection and the transepithelial sleeve and the upper part are connected by a second anti-rotational connection. However, in this patent application, the first anti-rotational connection is hexagonal and the second anti-rotational connection is lobed, having three lobes. This makes it difficult to know the position of the dental implant elements.

The present invention aims to provide a transepithelial pillar intended to facilitate the placing of a unitary prosthesis on a single dental implant.

### Brief Description of the Invention

An object of the invention is a set of a dental implant and prosthetic components, comprising a dental implant, a transepithelial sleeve, an upper part (e.g., a pillar post) intended to be fixed to the transepithelial sleeve, a first screw and a second screw. An upper end of the dental implant and a lower end of the transepithelial sleeve are connectable to one another via a first connection. In turn, an upper end of the transepithelial sleeve and a lower end of the upper part are connectable to one another via a second connection. The first screw extends through the transepithelial sleeve and is threaded to a blind threaded hole of the dental implant securing the transepithelial sleeve against the dental implant. In turn, the second screw extends through the upper part and is threaded to a blind threaded hole of the first screw, securing the upper part to the transepithelial sleeve. In accordance with the invention, the first connection and the second connection, i.e. the connection between the lower end of the transepithelial sleeve and the upper end of the dental implant and the connection between the upper end of the transepithelial sleeve and the lower end of the upper part, are anti-rotational.

Therefore, the set of dental implant and prosthetic components is characterised in that the anti-rotational geometry of the first connection and the second connection have similar shapes and are aligned in the direction of a central longitudinal axis of the dental implant, it is understood by similar shapes, that the connections have a cross-section with the same number of outward and inward portions and substantially the same geometry of the outward and inward portions.

The invention thus allows having a non-rotating transepithelial pillar that, in addition to providing an elongation or extension of the head so that the prosthetic restoration emerges above the gum, allows unitary prosthetic structures to be threaded, preventing the tooth from rotating in the patient's mouth.

### Brief Description of the Figures

The details of the invention can be seen in the accompanying figures, which do not intend to limit the scope of the invention:
- Figure 1 shows a top perspective view of a dental implant in accordance with an illustrative embodiment of the invention.
- Figure 2 shows a cross-sectional front elevation view of the dental implant of the previous figure.
- Figure 3 shows a top plan view of the dental implant of Figure 1.
- Figure 4 shows a top perspective view of a transepithelial sleeve in accordance with an illustrative embodiment of the invention.
- Figure 5 shows a bottom perspective view of the transepithelial sleeve of the previous figure.
- Figure 6 shows a cross-sectional front elevation view of the transepithelial sleeve of Figure 4.
- Figure 7 shows a top plan view of the transepithelial sleeve of Figure 4.
- Figure 8 shows a top perspective view of a first screw in accordance with an illustrative embodiment of the invention.
- Figure 9 shows a bottom perspective view of the first screw of dental implant, the transepithelial sleeve, the first screw, the upper part and the second screw of the previous figures.
- Figure 15 shows a cross-sectional front elevation view of the set of Figure 14.

### Detailed Description of the Invention

This invention relates to a set of a dental implant and prosthetic components, particularly indicated to secure a unitary dental prosthesis in a patient's upper or lower jaw bone. The set of dental implant and prosthetic components comprises a dental implant, a transepithelial sleeve, an upper part (e.g., a pillar post) intended to be secured to the transepithelial sleeve, a first screw and a second screw. The figures accompanying this description show an example of an embodiment of this set.

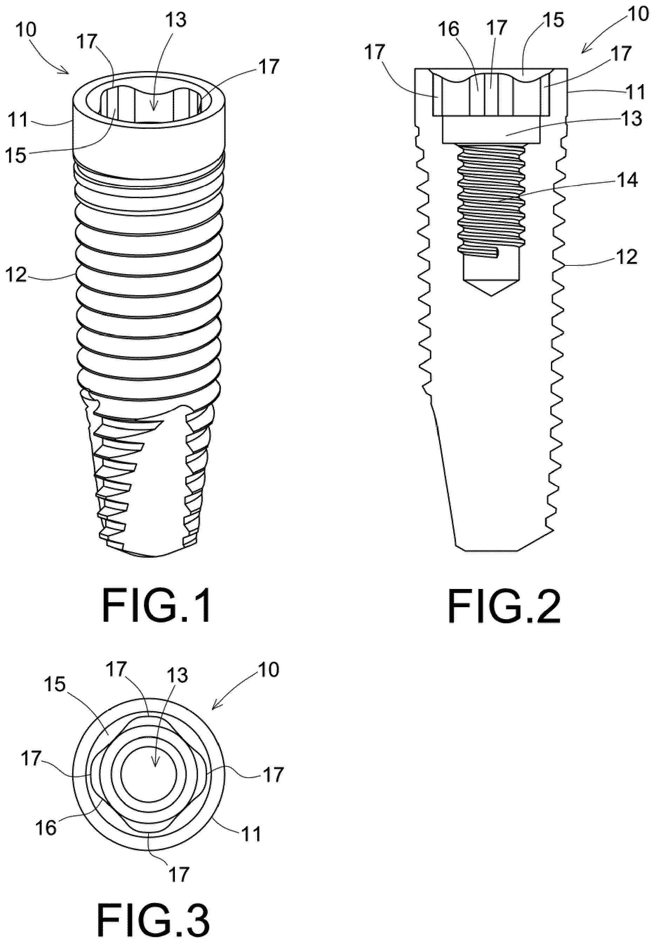

Figures 1 to 3 show two views of a dental implant (10) as per the illustrated example of an embodiment of the invention. The dental implant (10) comprises a head (11), a threaded body (12) and a blind threaded hole (13) that opens outwards at the upper end of the implant. The blind threaded hole (13) comprises an inner threaded area (14), located in registration with the threaded body (12) of the dental implant (10), and a female termination (15), situated at the head (11) of the dental implant (10). The female termination (15) comprises an anti-rotational portion, which can be, for example, a lobed portion (16) as shown in the figures. In this embodiment, the lobed portion (16) comprises four lobes (17) which are angularly equidistant, i.e. arranged at 90 degrees from one another. The threaded body (12) is intended to be secured to a patient's upper or lower jaw bone, with a subsequent osseointegration of the dental implant (10) taking place. When the dental implant (10) is positioned in place, the head (11) of the dental implant (10) is generally embedded in the gum. The prosthetic components, such as, for example those described below are connected at the female termination (10) of the dental implant (10).

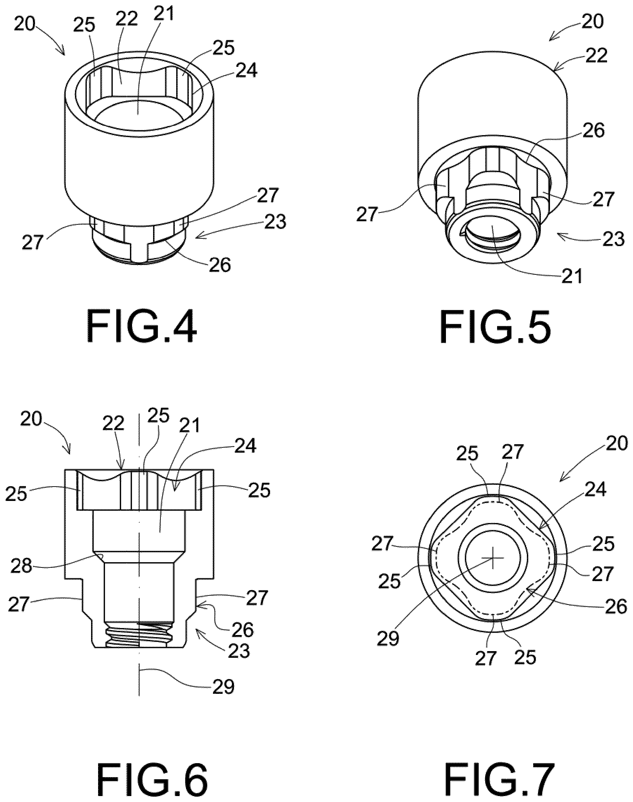

Figures 4 to 7 show three views of a transepithelial sleeve (20) as per the depicted illustrative embodiment of the invention. As can be seen, the transepithelial sleeve (20) is a body that has a through hole (21) and comprises a female termination (22) at its upper end and a male termination (23) at its lower end. The female termination (22) comprises an anti-rotational portion, which may be, for instance, a lobed portion (24) as shown in the figures. In this embodiment, this lobed portion (24) comprises four lobes (25) which are angularly equidistant, i.e. arranged at 90 degrees to each other. In turn, the male termination (23) comprises an anti-rotational portion that may be, for instance, a lobed portion (26) as shown in the figures. In this embodiment, this lobed portion (26) comprises four lobes (27) which are angularly equidistant, i.e. arranged at 90 degrees to each other.

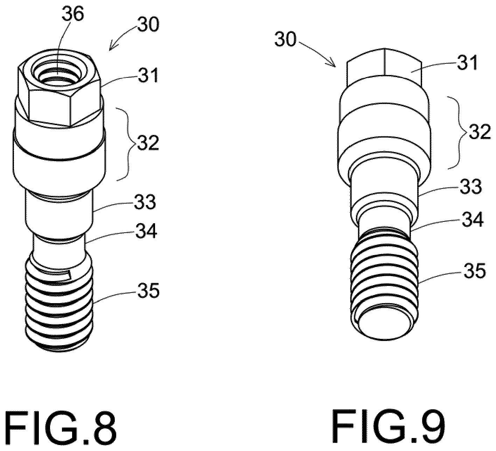

Figures 8 and 9 show two perspective views of a first screw (30), in accordance with the depicted illustrative embodiment of the invention. As can be seen in greater detail below, the purpose of the first screw (30) is to secure the transepithelial sleeve (20) to the dental implant (10) and allow the subsequent securing of the second screw, as is explained hereinafter. The first screw (30) comprises a hexagonal head (31), a non-threaded, first body portion (32) arranged following the head (31), a narrower, non-threaded second body portion (33) extending from the first body portion (32), and a further narrower, non-threaded third body portion (34) extending from the second body portion (33). A threaded portion (35) extends from the third body portion (34) and has an outer diameter that is less than or equal to the diameter of the second body portion (33). The first screw (30) also comprises a blind threaded hole (36) that extends toward the inside of the first screw (30) in the area of the head (31).

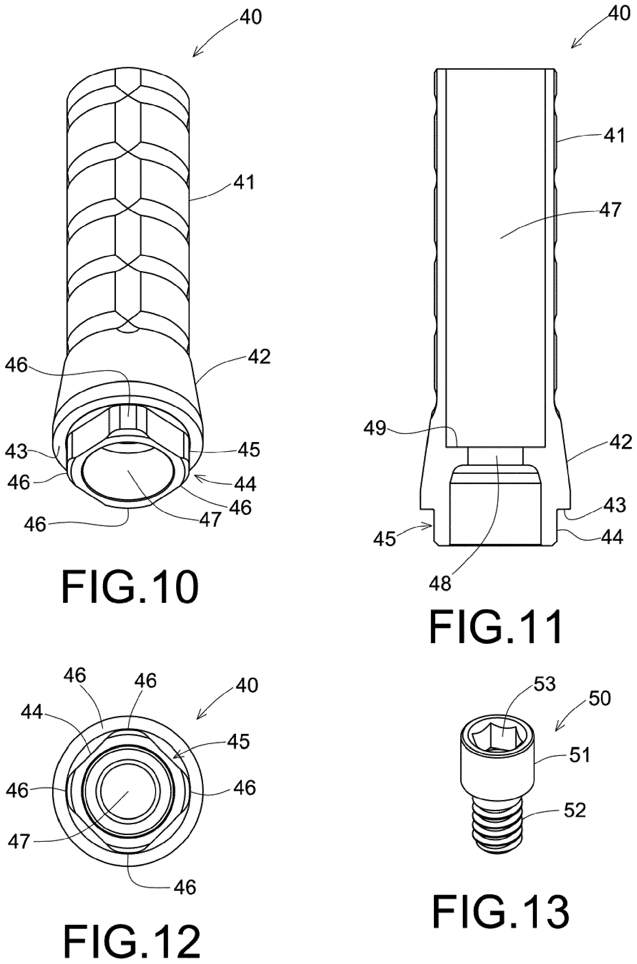

Figures 10 to 12 show three views of an upper part (40) as per the depicted illustrative embodiment of the invention. In this case, the upper part is a pillar post on which an artificial tooth (not illustrated) will be built. The upper part (40) or pillar post comprises a generally cylindrical elongated body (41), from which a conical portion (42) extends which provides an end surface (43) with a larger diameter than the diameter of the longitudinal body (41). A male protuberance or termination (44) protrudes from this end surface (43), the male termination (44) comprising an anti-rotational portion configured to couple in a male-female connection to the anti-rotational portion of the female termination (22) of the transepithelial sleeve (20) (Figure 4). This anti-rotational portion may be, for example, a lobed portion (45) as shown in the figures. In this embodiment, this lobed portion (45) comprises four lobes (46) which are angularly equidistant, i.e. arranged at 90 degrees to each other. A through hole (47) extends through the elongated body (41) from the inner end to the upper end. The through hole (47) has a narrowing (48). A seating surface (49) is arranged above the narrowing (48).

Figure 13 shows a perspective view of the second screw (50) as per the illustrative embodiment of the invention. The second screw (50) comprises a head (51) and threaded body (52). The head (51) has a non-circular anti-rotational cavity (53), such as having a hexagonal cross-section, for the connection of a manual or motorised torque-applying tool. The second screw (50) is intended to be inserted into the upper part (40) and secured to the first screw (30), as is shown in detail below.

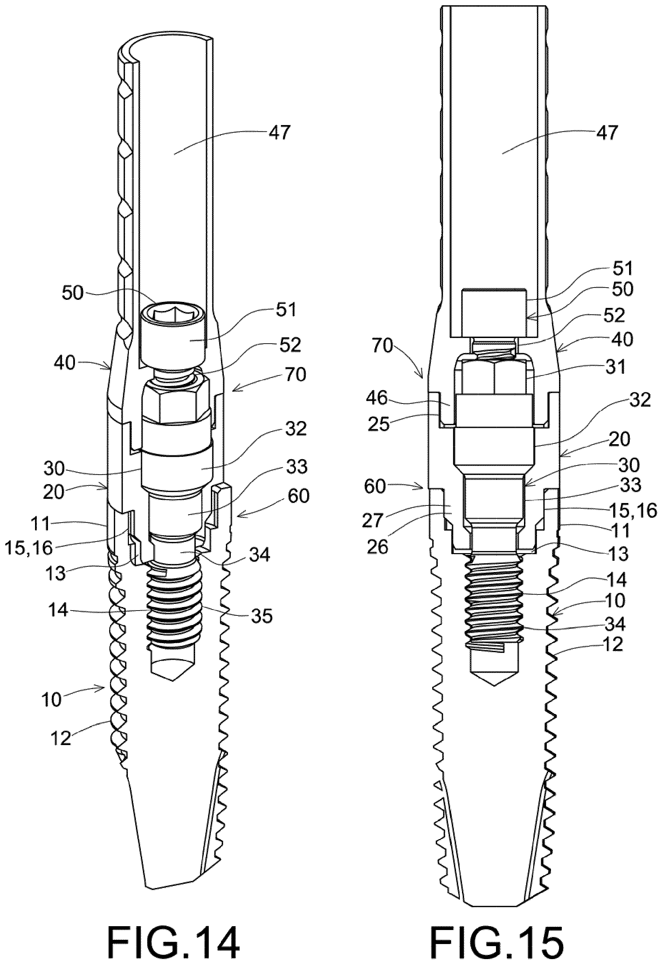

Figures 14 and 15 show two sections, in perspective and elevation views respectively, of the set made up of the dental implant (10), the transepithelial sleeve (20), the first screw (30), the upper part (40) and the second screw (50) of the previous figures.

As can be seen, the transepithelial sleeve (20) is secured to the dental implant (10) via the coupling of the female termination (15) of the upper end of the dental implant (10) to the male termination (23) of the lower end of the transepithelial sleeve (20), and the subsequent securing of the first screw (30) in between the two. More specifically, the first screw (30) extends through the through hole (21) of the transepithelial sleeve (20) and the threaded portion (35) of the first screw (30) and is threaded to the inner threaded area (14) of the blind threaded hole (13) of the dental implant (10). By tightening the first screw (30) sufficiently, the first body portion (32) of the first screw (30) is seated and presses against the inner surface (28) of the transepithelial sleeve (20), which has a radial component and which, in this embodiment, is conical; this pressure produced by the tightening of the first screw (30) keeps the dental implant (10) and the transepithelial sleeve (20) firmly secured to each other. The coupling between the dental implant (10) and the transepithelial sleeve (20) is anti-rotational, in this specific case via an anti-rotational coupling of the lobed portion (16) of the female termination (15) of the upper end of the dental implant (10) and the lobed portion (26) of the male termination (23) of the lower end of the transepithelial sleeve (20). Therefore, the transepithelial sleeve (20) cannot rotate with respect to the dental implant (10).

In turn, the upper part (40) is fixed to the transepithelial sleeve (20) via the coupling of the male termination (44) of the lower end of the upper part (40) and the female termination (22) of the upper end of the transepithelial sleeve (20), and the subsequent securing of the second screw (50) in between the two. More specifically, the second screw (50) extends through the through hole (47) of the upper part (40) and the threaded body (52) of the second screw (50) is threaded to the blind threaded hole (36) of the first screw (30). By tightening the second screw (50) sufficiently, the head (51) of the second screw (50) is seated and presses against the seating surface (49) in the through hole (47) of the upper part (40); the pressure produced by tightening the second screw (50) keeps the upper part (40) firmly fixed to the transepithelial sleeve (20). The coupling of the upper part (40) against the transepithelial sleeve (20) is anti-rotational, in this specific case via an anti-rotational coupling of the lobed portion (45) of the male termination (4) of the lower end of the upper part (40) and the lobed portion (24) of the female termination (22) of the upper end of the transepithelial sleeve (20). Therefore, the upper part (40) cannot rotate with respect to the transepithelial sleeve (20).

In this way, the set as per the invention is ideal for the positioning of a unitary dental prosthesis, as the prosthesis that is built in a fixed way on the upper part (4) does not turn with respect to the dental implant (10), thanks to the non-rotational connections between the upper part (40) and the transepithelial sleeve (20), and between the transepithelial sleeve (20) and the dental implant (10). The invention guarantees that even though the dental prosthesis is fixed to the bone via a single anchor (a single dental implant), the dental prosthesis remains fixed and does not rotate. (40) cannot rotate with respect to the transepithelial sleeve (20).

In this way, the set as per the invention is ideal for the positioning of a unitary dental prosthesis, as the prosthesis that is built in a fixed way on the upper part (4) does not turn with respect to the dental implant (10), thanks to the non-rotational connections between the upper part (40) and the transepithelial sleeve (20), and between the transepithelial sleeve (20) and the dental implant (10). The invention guarantees that even though the dental prosthesis is fixed to the bone via a single anchor (a single dental implant), the dental prosthesis remains fixed and does not rotate.

In the invention embodiment, an anti-rotational geometry of the first connection (60) and an anti-rotational geometry of the second connection (70) have similar shapes and are aligned in the direction of a longitudinal central axis of the dental implant (10). By similar shapes, it is understood that the connections have a cross-section with the same number of outward and inward portions and substantially the same geometry of the outward and inward portions (for example, an equal number of convex outward lobes and an equal number of concave inward portions).

For example, in this embodiment, as mentioned heretofore, the first connection (60) comprises an anti-rotational coupling between a female termination (15) of the dental implant (10) and a male termination (23) of the transepithelial sleeve (20). On the other hand, the second connection (70) comprises an anti-rotational coupling between a female termination (22) of the transepithelial sleeve (20) and a male termination (44) of the upper part (40). The female termination (15) of the dental implant (10) has a lobed portion (16) with the same angularly equidistant lobes (17) (in this case four lobes (17) at 90 degrees), and the male termination (23) of the transepithelial sleeve (20) has a lobed portion (26) with the same angularly equidistant lobes (27) (in this case four lobes (27) at 90 degrees). In turn, the female termination (22) of the transepithelial sleeve (20) has a lobed portion (24) with the same angularly equidistant lobes (25) (in this case four lobes (25) at 90 degrees), and the male termination (44) of the upper part (40) has a lobed portion (45) with the same angularly equidistant lobes (46) (in this case four lobes (46) at 90 degrees). As shown in implant (10), the surgeon can know the final orientation of the upper part (40) through the observation of the orientation of the geometry of the anti-rotational portion of the dental implant (10); in other words, the orientation of the geometry of the lobed portion (16) acts as a reference to the surgeon regarding the orientation of the upper lobed portion (24) of the transepithelial sleeve (20), and therefore of the upper part (40) once this has been placed at the end of the process. As a result, the surgeon may adjust the dental implant (10) to place the lobed portion (16) in the most suitable orientation that, in turn, allows for the optimum collocation of the upper part (40). Once the implant has been osseointegrated, the rest of the parts are positioned, in other words, the transepithelial sleeve (20), the first screw (30), the upper part (40) and the second screw (50), with the guarantee that the upper part (40) has a perfect angular orientation.

## Claims

1. Set of dental implant and prosthetic components (1), comprising a dental implant (10), a transepithelial sleeve (20), a first screw (30), an upper part (40) and a second screw (50), wherein an upper end of the dental implant (10) and a lower end of the transepithelial sleeve (20) are coupleable together via a first connection (60), wherein an upper end of the transepithelial sleeve (20) and a lower end of the upper part (40) are coupleable via a second connection (70), wherein the first screw (30) is configured to extend through the transepithelial sleeve (20) and thread to a blind threaded hole (13) of the dental implant (10) securing the transepithelial sleeve (20) against the dental implant (10), and wherein the second screw (50) is configured extend through the upper part (40) and thread to a blind threaded hole (36) of the first screw (30) securing the upper part (40) to the transepithelial sleeve (20), wherein:
- the first connection (60), between the lower end of the transepithelial sleeve (20) and the upper end of the dental implant (10), is anti-rotational; and
- the second connection (70), between the upper end of the transepithelial sleeve (20) and the lower end of the upper part (40), is anti-rotational;
and wherein the set of dental implant and prosthetic components (1) is **characterised in that**:
- an anti-rotational geometry of the first connection (60) and an anti-rotational geometry of the second connection (70) have similar shapes and are aligned in the direction of a central longitudinal axis of the dental implant (10), it is understood by similar shapes, that the connections have a *cross-section with* the same number of outward and inward portions and substantially the same geometry of the outward and inward portions.

2. Set of dental implant and prosthetic components (1), according to claim 1, **characterised in that** the second connection (70) comprises an anti-rotational coupling between a female termination (22) of the transepithelial sleeve (20) and a male termination (44) of the upper part (40).

3. Set of dental implant and prosthetic components (1) according to claim 2, **characterised in that** the female termination (22) of the transepithelial sleeve (20) has a lobed portion (24) with equal and angularly equidistant lobes (25), and the male termination (44) of the upper part (40) has a lobed portion (45) with equal and angularly equidistant lobes (46), wherein the lobed portions (24, 45) of the female termination (22) of the transepithelial sleeve (20) and the male termination (44) of the upper part (40) are coupleable anti-rotationally to one another.

4. Set of dental implant and prosthetic components (1), according to claim 3, **characterised in that** each lobed portion (24, 45) comprises four lobes (25, 46).

5. Set of dental implant and prosthetic components (1) according to claim 1, **characterised in that** the first connection (60) comprises an anti-rotational coupling between a female termination (15) of the dental implant (10) and a male termination (23) of the transepithelial sleeve (20).

6. Set of dental implant and prosthetic components (1), according to claim 5, **characterised in that** the second connection (70) comprises an anti-rotational coupling between a female termination (22) of the transepithelial sleeve (20) and a male termination (44) of the upper part (40).

7. Set of dental implant and prosthetic components (1), according to claim 6, **characterised in that** the female termination (15) of the dental implant (10) has a lobed portion (16) with equal and angularly equidistant lobes (17), and the male termination (23) of the transepithelial sleeve (20) has a lobed portion (26) with equal and angularly equidistant lobes (27), wherein the lobed portions (16, 26) of the female termination (15) of the dental implant (10) and of the male termination (23) of the transepithelial sleeve (20) are coupleable anti-rotationally to one another, and the female termination (22) of the transepithelial sleeve (20) has a lobed portion (24) with equal and angularly equidistant lobes (25), and the male termination (44) of the upper part (40) has a lobed portion (45) with equal and angularly equidistant lobes (46), wherein the lobed portions (16, 26) of the female termination (15) of the transepithelial sleeve (20) and of the male termination (23) of the upper part (40) are coupleable anti-rotationally to one another, wherein the lobed portions (24, 26) of the female termination (22) and the male termination (23) of the transepithelial sleeve (20) are aligned in the direction of a longitudinal axis (29) of the transepithelial sleeve (20).

8. Set of dental implant and prosthetic components (1), according to claim 7, **characterised in that** each lobed portion (16, 24, 26, 45) comprises four lobes (17, 25, 27, 46).

## Patentansprüche

1. Satz von Zahnimplantat- und Prothetikkomponenten (1), der ein Zahnimplantat (10), eine transepitheliale Hülse (20), eine erste Schraube (30), ein Oberteil (40) und eine zweite Schraube (50) umfasst, wobei ein oberes Ende des Zahnimplantats (10) und ein unteres Ende der transepithelialen Hülse (20) über eine erste Verbindung (60) miteinander koppelbar sind, wobei ein oberes Ende der transepithelialen Hülse (20) und ein unteres Ende des Oberteils (40) über eine zweite Verbindung (70) koppelbar sind, wobei die erste Schraube (30) so ausgebildet ist, dass sie sich durch die transepitheliale Hülse (20) erstreckt und in ein Gewindesackloch (13) des Zahnimplantats (10) geschraubt wird, wodurch die transepitheliale Hülse (20) an dem Zahnimplantat (10) befestigt wird, und wobei die zweite Schraube (50) so ausgebildet ist, dass sie sich durch das Oberteil (40) erstreckt und in ein Gewindesackloch (36) der ersten Schraube (30) geschraubt wird, wodurch das Oberteil (40) an der transepithelialen Hülse (20) befestigt wird, wobei:
- die erste Verbindung (60) zwischen dem unteren Ende der transepithelialen Hülse (20) und dem oberen Ende des Zahnimplantats (10) drehfest ist; und
- die zweite Verbindung (70) zwischen dem oberen Ende der transepithelialen Hülse (20) und dem unteren Ende des Oberteils (40) drehfest ist;
und wobei der Satz von Zahnimplantat- und Prothetikkomponenten (1) **dadurch gekennzeichnet ist, dass**:
- eine drehfeste Geometrie der ersten Verbindung (60) und eine drehfeste Geometrie der zweiten Verbindung (70) ähnliche Formen aufweisen und in Richtung einer zentralen Längsachse des Zahnimplantats (10) ausgerichtet sind, wobei unter ähnlichen Formen zu verstehen ist, dass die Verbindungen *einen Querschnitt mit* der gleichen Anzahl von äußeren und inneren Gewindeteilen und im Wesentlichen die gleiche Geometrie der äußeren und inneren Gewindeteile aufweisen.

2. Satz von Zahnimplantat- und Prothetikkomponenten (1) nach Anspruch 1, **dadurch gekennzeichnet, dass** die zweite Verbindung (70) eine drehfeste Kopplung zwischen einer Aufschraubverschraubung (22) der transepithelialen Hülse (20) und einer Einschraubverschraubung (44) des Oberteils (40) umfasst.

3. Satz von Zahnimplantat- und Prothetikkomponenten (1) nach Anspruch 2, **dadurch gekennzeichnet, dass** die Aufschraubverschraubung (22) der transepithelialen Hülse (20) einen gelappten Gewindeteil (24) mit gleichen und winkelmäßig äquidistanten Lappen (25) und die Einschraubverschraubung (44) des Oberteils (40) einen gelappten Gewindeteil (45) mit gleichen und winkelmäßig äquidistanten Lappen (46) aufweist, wobei die gelappten Gewindeteile (24, 45) der Aufschraubverschraubung (22) der transepithelialen Hülse (20) und der Einschraubverschraubung (44) des Oberteils (40) drehfest miteinander koppelbar sind.

4. Satz von Zahnimplantat- und Prothetikkomponenten (1) nach Anspruch 3, **dadurch gekennzeichnet, dass** jeder gelappte Gewindeteil (24, 45) vier Lappen (25, 46) umfasst.

5. Satz von Zahnimplantat- und Prothetikkomponenten (1) nach Anspruch 1, **dadurch gekennzeichnet, dass** die erste Verbindung (60) eine drehfeste Kopplung zwischen einer Aufschraubverschraubung (15) des Zahnimplantats (10) und einer Einschraubverschraubung (23) der transepithelialen Hülse (20) umfasst.

6. Satz von Zahnimplantat- und Prothetikkomponenten (1) nach Anspruch 5, **dadurch gekennzeichnet, dass** die zweite Verbindung (70) eine drehfeste Kopplung zwischen einer Aufschraubverschraubung (22) der transepithelialen Hülse (20) und einer Einschraubverschraubung (44) des Oberteils (40) umfasst.

7. Satz von Zahnimplantat- und Prothetikkomponenten (1) nach Anspruch 6, **dadurch gekennzeichnet, dass** die Aufschraubverschraubung (15) des Zahnimplantats (10) einen gelappten Gewindeteil (16) mit gleichen und winkelmäßig äquidistanten Lappen (17) aufweist, und die Einschraubverschraubung (23) der transepithelialen Hülse (20) einen gelappten Gewindeteil (26) mit gleichen und winkelmäßig äquidistanten Lappen (27) aufweist, wobei die gelappten Gewindeteile (16, 26) der Aufschraubverschraubung (15) des Zahnimplantats (10) und der Einschraubverschraubung (23) der transepithelialen Hülse (20) drehfest miteinander koppelbar sind, und die Aufschraubverschraubung (22) der transepithelialen Hülse (20) einen gelappten Gewindeteil (24) mit gleichen und winkelmäßig äquidistanten Lappen (25) und die Einschraubverschraubung (44) des Oberteils (40) einen gelappten Gewindeteil (45) mit gleichen und winkelmäßig äquidistanten Lappen (46) aufweist, wobei die gelappten Gewindeteile (16, 26) der Aufschraubverschraubung (15) der transepithelialen Hülse (20) und der Einschraubverschraubung (23) des Oberteils (40) drehfest miteinander koppelbar sind, wobei die gelappten Gewindeteile (24, 26) der Aufschraubverschraubung (22) und die Einschraubverschraubung (23) der transepithelialen Hülse (20) in Richtung einer Längsachse (29) der transepithelialen Hülse (20) ausgerichtet sind.

8. Satz von Zahnimplantat- und Prothetikkomponenten (1) nach Anspruch 7, **dadurch gekennzeichnet, dass** jeder gelappte Gewindeteil (16, 24, 26, 45) vier Lappen (17, 25, 27, 46) umfasst.

## Revendications

1. Ensemble d'implants et de pièces prothétiques dentaires (1) , comprenant un implant dentaire (10), un manchon transépithélial (20), une première vis (30), une pièce supérieure (40) et une seconde vis (50), où une extrémité supérieure de l'implant dentaire (10) et une extrémité inférieure du manchon transépithélial (20) peuvent être accouplés grâce à une première connexion (60), où une extrémité supérieure du manchon transépithélial (20) et une extrémité inférieure de la partie supérieure (40) peuvent être accouplées grâce à une seconde connexion (70), où la première vis (30) est configurée pour s'étendre à travers le manchon transépithélial (20) et se visser dans un orifice fileté borgne (13) de l'implant dentaire (10) sécurisant le manchon transépithélial (20) contre l'implant dentaire (10) et où la seconde vis (50) est configurée pour s'étendre à travers la partie supérieure (40) et se visser à un orifice fileté borgne (36) de la première vis (30) fixant la partie supérieure (40) au manchon transépithélial (20), où :
- la première connexion (60) entre l'extrémité inférieure du manchon transépithélial (20) et l'extrémité supérieure de l'implant dentaire (10) est anti-rotationnelle ; et
- la seconde connexion (70) entre l'extrémité supérieure du manchon transépithélial (20) et l'extrémité inférieure de la partie supérieure (40) est anti-rotationnelle ; et où l'ensemble composé de l'implant dentaire et des pièces prothétiques (1) est **caractérisé par le fait que** :
- une géométrie anti-rotationnelle de la première connexion (60) et une géométrie anti-rotationnelle de la seconde connexion (70) ont des formes similaires et sont alignées dans le sens d'un axe central en longueur de l'implant dentaire (10), étant entendu par formes similaires que les connexions ont une *section transversale* avec le même nombre de parties vers l'extérieur et *vers* l'intérieur et substantiellement la même géométrie des parties vers l'extérieur et vers l'intérieur.

2. Ensemble composé par un implant dentaire et des pièces prothétiques (1) conformément à la revendication 1, **caractérisé par le fait que** la seconde connexion (70) comprend un accouplement anti-rotationnel entre une terminaison femelle (22) du manchon transépithélial (20) et une terminaison mâle (44) de la partie supérieure (40).

3. Ensemble d'implant dentaire et de pièces prothétiques (1) conformément à la revendication 2, **caractérisé par le fait que** la terminaison femelle (22) du manchon transépithélial (20) contient une partie lobée (24) avec des lobes égaux angulairement équidistants (25) et la terminaison mâle (44) de la partie supérieure (40) a une partie lobée (45) avec des lobes égaux et angulairement équidistants (46), où les portions lobées (24, 25) de la terminaison femelle (22) du manchon transépithélial (20) et la terminaison mâle (44) de la partie supérieure (40) peuvent être accouplés anti-rotationnellement l'un à l'autre.

4. Ensemble d'implant dentaire et de pièces prothétiques (1) conformément à la revendication 3, **caractérisé par le fait que** chaque partie lobée (24, 25) comprend quatre lobes (25, 46).

5. Ensemble composé par un implant dentaire et des pièces prothétiques (1) conformément à la revendication 1 **caractérisé par le fait que** la première connexion (60) comprend un accouplement anti-rotationnel entre une terminaison femelle (15) de l'implant dentaire (10) et une terminaison mâle (23) du manchon transépithélial (20).

6. Ensemble d'implant dentaire et de pièces prothétiques (1) conformément à la revendication 5, **caractérisé par le fait que** la seconde connexion (70) comprend un accouplement anti-rotationnel entre une terminaison femelle (22) du manchon transépithélial (20) et une terminaison mâle (44) de la partie supérieure (40).

7. Ensemble d'implants dentaires et de pièces prothétiques (1), conformément à la revendication 6, **caractérisé par le fait que** la terminaison femelle (15) de l'implant dentaire (10) a une partie lobée (16) avec des lobes égaux et angulairement équidistants (17), et la terminaison mâle (23) du manchon transépithélial (20) a une partie lobée (26) avec des lobes égaux et angulairement équidistants (27), dans laquelle les parties lobées (16, 26) de la terminaison femelle (15) de l'implant dentaire (10) et de la terminaison mâle (23) du manchon transépithélial (20) peuvent être accouplées l'une à l'autre de manière anti-rotationnelle, et la terminaison femelle (22) du manchon transépithélial (20) a une partie lobée (24) avec des lobes égaux et angulairement équidistants (25), et la terminaison mâle (44) de la partie supérieure (40) a une partie lobée (45) avec des lobes égaux et angulairement équidistants (46), dans laquelle les parties lobées (16, 26) de la terminaison femelle (15) du manchon transépithélial (20) et de la terminaison mâle (23) de la partie supérieure (40) peuvent être couplées l'une à l'autre de manière anti-rotationnelle, les parties lobées (24, 26) de la terminaison femelle (22) et de la terminaison mâle (23) du manchon transépithélial (20) étant alignées dans la direction d'un axe longitudinal (29) du manchon transépithélial (20).

8. Ensemble d'implant dentaire et de pièces prothétiques (1) conformément à la revendication 7, **caractérisé par le fait que** chaque partie lobée (16, 24, 26, 45) comprend quatre lobes (17, 25, 27, 46).
